# FASCICULE DE BREVET EUROPEEN

(11) **EP 3 816 617 B1**
(45) Date de publication et mention de la délivrance du brevet: **02.04.2025**
(21) Numéro de dépôt: 20210986.4
(22) Date de dépôt: 29.09.2014
(51) Int. Cl.: G01N 27/12, G01N 27/406, G01N 27/22, H05B 3/20, H05B 3/14, G01N 27/407

(54) **CAPTEUR À GAZ À COUCHE SENSIBLE CHAUFFÉE**
GAS SENSOR MIT BEHEIZTER SENSORSCHICHT
HEATED SENSITIVE LAYER GAS SENSOR

(30) Priorité: 01.10.2013 FR 1359494
(43) Date de publication de la demande: 05.05.2021
(62) Demande divisionnaire de: 14789318.4
(73) Titulaire: Université d'Aix Marseille, 13284 Marseille Cedex 07 (FR); Centre national de la recherche scientifique, 75016 Paris (FR)
(72) Inventeur: AGUIR, Khalifa, 13190 ALLAUCH (FR); BENDAHAN, Marc, 13380 PLAN DE CUQUES (FR); LAITHIER MARTINI, Virginie, Marie, 13120 Gardanne (FR)
(74) Mandataire: de Jong, Jean Jacques

(56) Documents cités:
- EP-A2- 0 945 722
- WO-A2-2006/005332
- US-A1- 2008 134 753
- US-A1- 2009 217 737

## Description

### Domaine technique de l'invention

L'invention est relative aux capteurs de molécules, notamment de gaz, fonctionnant avec une couche sensible chauffée.

### État de la technique

La couche sensible de ce type de capteur comprend généralement un oxyde semi-conducteur dont la nature et la température de fonctionnement sont choisies en fonction des molécules à détecter. La résistivité de la couche sensible varie en fonction de la concentration de molécules adsorbées par la couche d'oxyde.

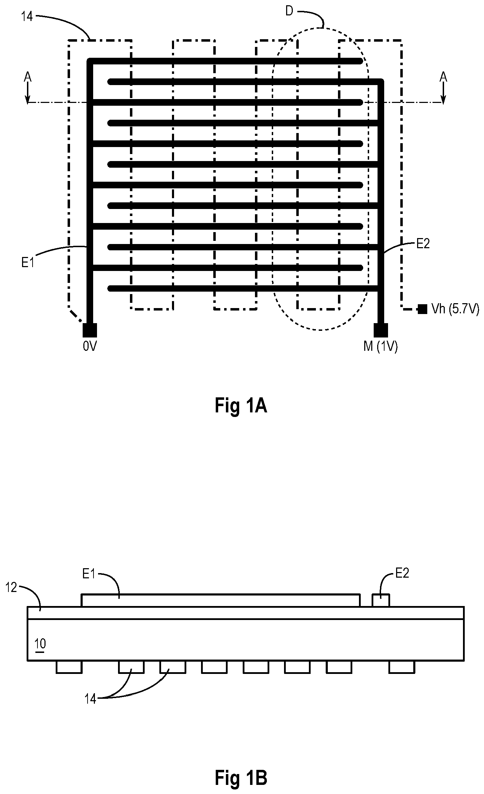

Les figures 1A et 1B représentent schématiquement une vue de dessus et une vue en coupe selon un axe AA d'un capteur à couche sensible chauffée classique, du type décrit, par exemple, dans les articles [I Dewa Putu Hermida et al., « Development Of Co Gas Sensing Based SnO2 Thin Film », International Journal of Engineering & Technology IJET-IJENS Vol: 13 No: 01] et [George F. Fine et al., « Metal Oxide Semi-Conductor Gas Sensors in Environmental Monitoring », Sensors 2010, 10, 5469-5502].

Le capteur comprend un substrat isolant 10 portant sur sa face supérieure une couche sensible 12, à base d'oxyde semi-conducteur. Deux électrodes complémentaires, sous la forme de pistes conductrices E1 et E2, sont disposées en contact électrique avec la couche sensible 12. Les électrodes E1 et E2 sont configurées pour mesurer les variations de résistivité des zones de la couche sensible situées entre les électrodes. Pour améliorer la sensibilité, on cherche à maximiser les longueurs en regard des deux électrodes. Pour cela, les pistes des électrodes sont souvent réalisées sous forme de peignes interdigités, comme cela est représenté.

Chacune des électrodes comprend une borne de contact disposée à la périphérie du capteur, hors de la zone active de la couche sensible. La borne de l'électrode E1 est mise à un potentiel de masse (0 V), et la borne de l'électrode E2 est mise à un potentiel de mesure M, de l'ordre de 1 V. Le capteur est exploité en mesurant le courant circulant entre les bornes des deux électrodes.

Pour chauffer la couche sensible 12, on prévoit une piste résistive 14 isolée électriquement de la couche sensible, disposée par exemple sur la face inférieure du substrat 10. La piste 14 est configurée pour échauffer uniformément la zone active de la couche sensible, c'est-à-dire l'ensemble des zones situées entre des doigts en regard des électrodes. La piste 14 est souvent sous forme de serpentin, comme cela est représenté.

Elle est alimentée entre la masse (0 V) et un potentiel Vh régulé en fonction de la température souhaitée.

Des capteurs à couche sensible chauffée sont aussi connus de US2009217737 A1, US2008134753 A1, WO2006005332 A2 et EP0945722 A2.

La structure d'un capteur à couche sensible chauffée et les matériaux utilisés se prêtent particulièrement bien à une fabrication selon les technologies de la microélectronique utilisées pour les circuits intégrés. Les dimensions du capteur sont alors tellement petites que l'on peut chauffer la couche sensible jusqu'à 350°C avec une consommation de seulement 30 mW. On constate néanmoins que les couches sensibles de tels capteurs vieillissent plus vite que dans des capteurs réalisés selon d'autres technologies.

### Résumé de l'invention

On souhaite ainsi rallonger la durée de vie d'un capteur à couche sensible chauffée, réalisé selon les technologies des circuits intégrés.

On tend à satisfaire ce besoin en prévoyant un capteur à couche sensible chauffée, tel que défini dans la revendication indépendante 1 et les revendications dépendantes 2 à 7.

### Description sommaire des dessins

Des modes de réalisation seront exposés dans la description suivante, faite à titre non limitatif en relation avec les figures jointes parmi lesquelles :
- les figures 1A et 1B, précédemment décrites, représentent schématiquement une vue de dessus et une vue en coupe d'un capteur à couche sensible chauffée classique ;
- la figure 2 représente schématiquement un mode de réalisation de piste résistive d'un élément chauffant de capteur, permettant d'augmenter la durée de vie du capteur ;
- la figure 3 représente schématiquement un autre mode de réalisation de piste résistive et un mode de réalisation d'électrodes adaptées ; et
- la figure 4 illustre une technique de mise en série de plusieurs structures du type de la figure 3.

### Description d'un mode de réalisation préféré de l'invention

Les inventeurs ont constaté que la couche sensible d'un capteur chauffé de petites dimensions, notamment lorsque le capteur est réalisé selon une technologie de fabrication des circuits intégrés, se détériorait principalement du côté du potentiel le plus élevé (Vh) alimentant la piste résistive, dans une zone D représentée sur la figure 1A. Les inventeurs attribuent cet effet au champ électrique subi par la couche sensible. En effet, le potentiel Vh d'alimentation de la piste résistive est relativement élevé, pouvant atteindre 5,7 V, et la distance entre la piste résistive et les pistes conductrices des électrodes peut être particulièrement faible dans les technologies des circuits intégrés, de sorte qu'il règne un champ électrique intense à chaque croisement d'une électrode et de la piste résistive, du côté où la piste résistive est au potentiel le plus élevé. C'est en effet au niveau de ces croisements de piste que l'on constate les premières détériorations de la couche sensible.

Pour éviter cette détérioration liée au champ électrique, le fait d'éloigner la piste résistive des électrodes ne résout pas le problème, car l'efficacité de chauffage diminuerait et exigerait une augmentation du potentiel d'alimentation de la piste résistive.

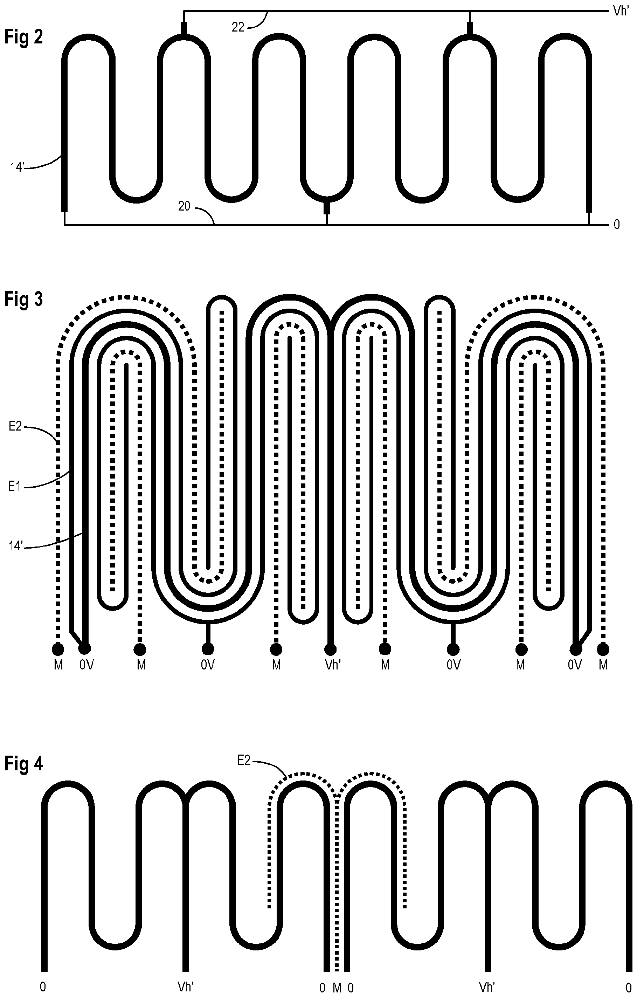

La figure 2 représente schématiquement une configuration de piste résistive 14' de l'élément de chauffage, permettant de diminuer le champ électrique sans diminuer l'efficacité de chauffage. La piste résistive, ici en forme de serpentin, comprend, outre les bornes d'alimentation extrêmes, un ou plusieurs points d'alimentation intermédiaires régulièrement espacés sur la longueur de la piste résistive. Dans la figure 2, la piste résistive comprend trois points d'alimentation intermédiaires, à titre d'exemple, donc cinq points d'alimentation en comptant les bornes extrêmes. Les points de rang impair sont alimentés par le premier des potentiels d'alimentation, par exemple la masse (0 V), et les points de rang pair sont alimentés par le deuxième potentiel d'alimentation, le potentiel haut Vh'. Pour cela, les points de rang impair peuvent être connectés à une ligne de faible résistivité commune 20 alimentée par le premier potentiel, et les points de rang pair peuvent être connectés à une ligne de faible résistivité commune 22 alimentée par le deuxième potentiel.

Avec la configuration représentée, le potentiel Vh' peut être divisé par 4 par rapport au potentiel Vh requis avec seulement deux bornes d'alimentation, tout en fournissant la même puissance de chauffage. En effet, chaque segment du serpentin présente un quart de la résistance totale et voit à ses bornes un quart de la tension d'alimentation classique : le courant est inchangé par rapport à la configuration classique, donc la puissance dissipée est la même. Le champ électrique peut ainsi être divisé par le nombre de segments utilisés dans la piste résistive.

Pour simplifier la fabrication du capteur on souhaite réaliser les pistes des électrodes et la piste résistive de manière coplanaire. Cela permet de les former avec un seul niveau de masque. Dans ce cas, comme cela est représenté à la figure 2, il est préférable que les bornes d'alimentation soient situées sur les bords du capteur, pour éviter de tracer des pistes d'alimentation qui traversent la zone active du capteur ou de placer des vias dans cette zone. Les bornes d'alimentation peuvent ensuite être reliées à des pistes métalliques et des vias disposées hors de la zone active du capteur.

La figure 3 représente schématiquement un autre mode de réalisation de capteur. La piste résistive 14' comporte ici deux segments en serpentin qui sont symétriques par rapport à un axe vertical passant par le point d'alimentation central, ici porté au potentiel Vh'. Si chaque segment a un nombre impair d'arcs, comme cela est représenté, les points d'alimentation extrêmes, ici à 0 V, sont situés sur le même bord du capteur que le point central.

Avec cette configuration, le tronçon central de la piste résistive véhicule le courant pour chacun des deux segments, et voit donc deux fois plus de courant que chacun des segments. Si le tronçon central a la même résistivité que le reste de la piste résistive, il dissipe quatre fois plus de puissance que le reste. Pour uniformiser la puissance de chauffe, le tronçon central peut être dimensionné pour présenter le quart de la résistivité du reste de la piste.

La figure 3 représente également un exemple de configuration du tracé des électrodes E1 et E2 permettant de réaliser les électrodes dans le même plan que la piste résistive 14'. Ce tracé des électrodes est en outre configuré pour réduire davantage les champs électriques subis par la couche sensible.

Les tracés classiques des électrodes, comme celui représenté à la figure 1B, présentent de nombreux changements de direction ayant des rayons de courbure proches de zéro. Il en résulte des accentuations locales du champ électrique au niveau de chaque changement de direction.

Pour diminuer cet effet, comme cela est représenté à la figure 3, les changements de direction des pistes des électrodes E1, E2, et de la piste résistive 14' se font selon des rayons de courbure non-nuls, selon des arcs de cercle. Le serpentin de la piste résistive 14' est formé d'une succession d'arcs en forme de « U ». Pour les électrodes, on cherche également à éviter des tracés en forme de peigne, présentant de nombreux angles droits et d'extrémités aigües. Ainsi, les pistes des deux électrodes E1, E2 suivent parallèlement la piste résistive 14' en pénétrant dans chaque arc. En sortant de l'arc, l'électrode la plus éloignée de la piste résistive, ici E2, s'arrête, tandis que l'électrode adjacente à la piste résistive, ici E1, fait un demi-tour autour de l'extrémité de l'électrode E2 pour pénétrer de nouveau dans l'arc. Ce tracé permet de maximiser la longueur en regard des électrodes sans utiliser des motifs en peigne.

Avec cette technique de tracé des électrodes, on forme une paire de pistes d'électrodes E1, E2 pour chaque arc du serpentin. Le point de départ de chaque piste de la paire est connecté sur une borne au bord du capteur, à partir de laquelle la piste peut être alimentée et reliée aux pistes homologues des autres arcs, le cas échéant par des vias, en dehors de la zone active du capteur.

Au début de la piste résistive 14', comme cela est représenté, une paire d'électrodes E1, E2 démarre sur le même bord que la piste résistive et suit le premier arc parallèlement de l'extérieur jusqu'à l'arc suivant, où le motif décrit ci-dessus est commencé. Le motif au niveau de la fin de la piste résistive est symétrique.

La configuration de la figure 3 permet de réaliser les pistes des électrodes et la piste résistive dans un même plan en contact avec la couche sensible. La piste résistive 14', si elle est en contact électrique avec la couche sensible, pourrait générer des courants parasites dans la couche sensible qui perturberaient la mesure effectuée par les électrodes.

Pour éviter cela, on pourrait déposer entre la couche sensible et la piste résistive un isolant local, ou bien déposer la couche sensible de manière locale sur les électrodes. Cela nuirait à l'efficacité de chauffage de la couche sensible.

La configuration d'alimentation des électrodes représentée à la figure 3 permet d'éviter l'effet de courants parasites générés par la piste résistive lorsqu'elle est en contact électrique avec la couche sensible. Les pistes d'électrode E1 adjacentes à la piste résistive sont mises à la masse (0 V) tandis que les pistes d'électrode E2 les plus éloignées sont alimentées au potentiel de mesure M. Alors tout courant tendant à circuler dans la couche sensible entre les pistes d'électrode E1 et la piste résistive 14' passe par la masse et ne parvient pas aux pistes d'électrode E2.

Dans ces conditions, la configuration de la figure 3 peut être utilisée indifféremment avec une couche sensible déposée en dessous ou au-dessus. On préfère que la couche sensible soit au-dessus, car elle expose alors une surface maximale au milieu ambiant.

La configuration de la figure 3 peut être utilisée dans une structure plus traditionnelle, avec la piste résistive 14' disposée dans un plan différent de celui des électrodes E1, E2. Elle garde son intérêt de la diminution des champs électriques. Les proportions et la position de la piste résistive et des électrodes sont gardées, de sorte que le tracé des pistes des électrodes, projeté sur le plan de la piste résistive, reste en dehors d'une marge définie autour de la piste résistive - en d'autres termes on évite de croiser les pistes des électrodes avec la piste résistive dans la zone active du capteur.

La figure 4 illustre un exemple de technique de mise en série de plusieurs structures du type de la figure 3. Deux structures du type de la figure 3 peuvent être mises bout à bout en mettant en commun un tronçon latéral de l'électrode E2. On parvient ainsi à diminuer la tension d'alimentation Vh' de la piste résistive par un facteur égal au nombre de segments, selon les besoins de l'application envisagée.

Cette configuration permet d'utiliser toute la structure sous la forme d'un seul capteur, en reliant les différentes structures ensemble, ou bien d'utiliser les différentes structures de manière séparée et avoir ainsi une configuration « multicapteurs », permettant de disposer de plusieurs signaux différents (en rapport avec la température de chaque serpentin par exemple) et de réaliser un dispositif de type « nez électronique ».

## Revendications

1. Capteur à couche sensible chauffée obtenu par une technologie de fabrication de circuits intégrés, comprenant :
• un substrat isolant (10) portant une couche sensible (12) ;
• deux électrodes de mesure complémentaires (E1, E2) sous la forme de deux pistes conductrices adjacentes agencées en contact électrique avec la couche sensible (12) pour mesurer la résistivité de la couche sensible entre les deux électrodes conductrices ;
• un élément chauffant (14) sous la forme d'une piste résistive (14') agencée sur le substrat pour chauffer une zone active de la couche sensible, la piste résistive comprenant au moins trois points d'alimentation électrique (0, Vh') régulièrement espacés sur une longueur de la piste résistive, d'où il résulte que la piste résistive est divisée en une pluralité de segments entre les points d'alimentation électrique ; et
• la piste résistive comporte des arcs successifs en forme de U ;
**caractérisé en ce que** :
• une première des deux pistes d'électrode pénètre dans au moins un des arcs de la piste résistive et s'étend parallèlement à l'arc, formant un deuxième arc adjacent à l'arc de la piste résistive ; et
• la deuxième des deux pistes d'électrode pénètre dans le deuxième arc et est adjacente au deuxième arc.

2. Capteur selon la revendication 1, dans lequel le tracé des deux pistes d'électrode, projetée sur un plan de la piste résistive, reste en dehors d'une marge définie autour de la piste résistive.

3. Capteur selon la revendication 2, dans lequel la piste résistive et les deux pistes d'électrode sont coplanaires.

4. Capteur selon la revendication 2, dans lequel les changements de direction de la piste résistive et des deux pistes d'électrode dans la zone active de la couche sensible ont un rayon de courbure non nul.

5. Capteur selon la revendication 4, dans lequel les deux pistes d'électrode sont configurées de manière que :
(i) la deuxième piste d'électrode se termine à la sortie de l'arc en forme de U ; et
(ii) la première piste d'électrode forme, à la sortie de l'arc en U, un demi-tour autour de l'extrémité de la deuxième piste d'électrode pour revenir dans l'arc en U.

6. Capteur selon la revendication 5, dans lequel :
• la piste résistive est coplanaire avec les deux pistes d'électrode et également en contact électrique avec la couche sensible ; et
• la première piste d'électrode est reliée à une masse de sorte que tout courant circulant dans la couche sensible entre la piste résistive et la première piste d'électrode ne perturbe pas un courant circulant entre les deux pistes d'électrode.

7. Capteur selon la revendication 1, dans lequel la piste résistive est configurée pour chauffer la couche sensible jusqu'à 350°C.

## Patentansprüche

1. Sensor mit erhitzter empfindlicher Schicht, der durch eine Technologie für eine Herstellung integrierter Schaltungen erhalten wird, umfassend:
• ein isolierendes Substrat (10), das eine empfindliche Schicht (12) trägt;
• zwei komplementäre Messelektroden (E1, E2) in Form von zwei nebeneinander angeordneten Leiterbahnen, die in elektrischem Kontakt mit der empfindlichen Schicht (12) angeordnet sind, zum Messen des spezifischen Widerstands der empfindlichen Schicht zwischen den zwei leitfähigen Elektroden;
• ein Heizelement (14) in Form einer Widerstandsbahn (14'), die auf dem Substrat angeordnet ist, zum Erhitzen eines aktiven Bereichs der empfindlichen Schicht, die Widerstandsbahn umfassend mindestens drei Stromversorgungspunkte (0, Vh'), die über eine Länge der Widerstandsbahn regelmäßig beabstandet sind, wodurch sich ergibt, dass die Widerstandsbahn zwischen den Stromversorgungspunkten in eine Vielzahl von Segmenten unterteilt ist; und
• wobei die Widerstandsbahn aufeinanderfolgende U-förmige Bögen aufweist;
**dadurch gekennzeichnet, dass:**
• eine erste der zwei Elektrodenbahnen mindestens einen der Bögen der Widerstandsbahn durchdringt und sich parallel zu dem Bogen erstreckt, wobei ein zweiter Bogen neben dem Bogen der Widerstandsbahn ausgebildet wird; und
• die zweite der zwei Elektrodenbahnen den zweiten Bogen durchdringt und neben dem zweiten Lichtbogen ist.

2. Sensor nach Anspruch 1, wobei der Verlauf der zwei Elektrodenbahnen, der auf eine Ebene der Widerstandsbahn projiziert ist, außerhalb eines Rands bleibt, der um die Widerstandsbahn herum definiert ist.

3. Sensor nach Anspruch 2, wobei die Widerstandsbahn und die zwei Elektrodenbahnen koplanar sind.

4. Sensor nach Anspruch 2, wobei die Richtungsänderungen der Widerstandsbahn und der zwei Elektrodenbahnen in dem aktiven Bereich der empfindlichen Schicht einen Krümmungsradius ungleich null aufweisen.

5. Sensor nach Anspruch 4, wobei die zwei Elektrodenbahnen so konfiguriert sind, dass:
(i) die zweite Elektrodenbahn an dem U-förmigen Lichtbogenausgang endet; und
(ii) die erste Elektrodenbahn an dem Ausgang des U-förmigen Bogens eine halbe Windung um das Ende der zweiten Elektrodenbahn herum zum Zurückkehren in den U-Bogen ausbildet.

6. Sensor nach Anspruch 5, wobei:
• die Widerstandsbahn koplanar mit den zwei Elektrodenbahnen und auch mit der empfindlichen Schicht in elektrischem Kontakt ist; und
• die erste Elektrodenbahn mit Masse verbunden ist, sodass der gesamte Strom, der in der empfindlichen Schicht zwischen der Widerstandsbahn und der ersten Elektrodenbahn fließt, einen Strom nicht stört, der zwischen den zwei Elektrodenbahnen fließt.

7. Sensor nach Anspruch 1, wobei die Widerstandsbahn zum Erhitzen der empfindlichen Schicht auf bis zu 350 °C konfiguriert ist.

## Claims

1. A heated sensitive film sensor obtained by integrated circuit manufacturing technology, comprising:
• an insulating substrate (10) bearing a sensitive layer (12);
• two complementary measuring electrodes (E1, E2) in the form of two adjacent conductive tracks arranged in electrical contact with the sensitive layer (12) to measure the resistivity of the sensitive layer between the two conductive electrodes;
• a heating element (14) in the form of a resistive track arranged on the substrate to heat an active area of the sensitive layer, the resistive track comprising at least three power supply points (0, Vh') evenly spaced along a length of the resistive track, whereby the resistive track is divided into a plurality of segments between the power supply points; and
• the resistive track has successive U-shaped arcs;
**characterised in that**:
• a first of the two electrode tracks penetrates at least one of the arcs of the resistive track and extends parallel to the arc, forming a second arc adjacent to the arc of the resistive track; and
• the second of the two electrode tracks enters the second arc and is adjacent to the second arc.

2. The sensor of claim 1, wherein the layout of the two electrode tracks, projected onto a plane of the resistive track, remains outside a margin defined around the resistive track.

3. The sensor of claim 2, wherein the resistive track and the two electrode tracks are coplanar.

4. The sensor of claim 2, wherein changes in the direction of the resistive track and the two electrode tracks in the active area of the sensitive layer have a non-zero radius of curvature.

5. The sensor of claim 4, wherein the two electrode tracks are configured so that:
(i) the second electrode track terminates at the exit of the U-shaped arc; and
(ii) the first electrode track forms, at the exit of the U-arc, a half-turn around the end of the second electrode track to return in the U-arc.

6. The sensor of claim 5, wherein:
• the resistive track is coplanar with the two electrode tracks and also in electrical contact with the sensitive layer; and
• the first electrode track is connected to a ground so that any current flowing through the sensitive layer between the resistive track and the first electrode track does not disturb a current flowing between the two electrode tracks.

7. The sensor of claim 1, wherein the resistive track is configured to heat the sensitive layer up to 350°C.
